# NEUE EUROPÄISCHE PATENTSCHRIFT

(11) **EP 2 113 419 B2**
(45) Veröffentlichungstag und Bekanntmachung des Hinweises auf die Entscheidung über den Einspruch: **22.04.2020**
(45) Hinweis auf die Patenterteilung: 13.10.2010
(21) Anmeldenummer: 09009536.5
(22) Anmeldetag: 09.08.2008
(51) Int. Cl.: B60R 5/04

(54) **Abdeckeinrichtung für den Fahrzeuginnenraum**
Covering device for the interior of a vehicle
Dispositif de recouvrement pour l'espace intérieur d'un véhicule

(30) Priorität: 24.08.2007 DE 102007040282
(43) Veröffentlichungstag der Anmeldung: 04.11.2009
(62) Teilanmeldung aus: 08014251.6
(73) Patentinhaber: Küster Holding GmbH, 35630 Ehringshausen (DE)
(72) Erfinder: Stotz, Manuel, 35796 Weinbach (DE)
(74) Vertreter: Dr. Müller Patentanwälte

(56) Entgegenhaltungen:
- EP-A- 0 941 176
- EP-A- 1 084 907
- EP-A- 1 334 875
- EP-A- 1 386 784
- EP-A1- 1 279 537
- DE-A1- 10 123 420
- DE-A1- 10 151 068
- DE-A1- 10 216 186
- DE-A1- 10 224 157
- DE-A1- 19 836 705
- DE-A1-102005 049 999
- DE-B3- 10 356 911
- DE-C1- 19 910 830
- DE-U1- 7 819 208
- DE-U1-202004 007 896
- DE-U1-202004 020 106
- DE-U1-202006 019 796
- JP-A- 11 286 243

## Beschreibung

Die Erfindung betrifft eine Laderaumabdeckvorrichtung gemäß dem Oberbegriff des Anspruchs 1.

### Stand der Technik

Derartige Schutzvorrichtungen für den Innenraum eines Kraftfahrzeugs sind beispielsweise aus der EP 0 941 176 B1 sowie aus der EP 1 084 907 A2 hinlänglich bekannt. So ist in der EP 1 084 907 A2 eine Laderaumabdeckung mit einer Abdeckplane beschrieben, die auf einer Rollowelle gehalten ist. An ihrem in Auszugsrichtung vorderen Stirnende ist die Abdeckplane mit einer sich quer über ihre gesamte Breite erstreckenden Auszugsstange versehen, welche mit gegenüberliegenden Stirnenden seitlich über die Abdeckplane hinaus in Führungsprofilen horizontal verschiebbar gelagert ist.

In jedem Führungsprofil ist jeweils ein als Kupplungsglied dienender Mitnehmerschlitten linear beweglich gelagert. Die beiden Mitnehmerschlitten eines der Führungsprofile sind dabei mittels einer Antriebsvorrichtung synchron zueinander in dem jeweiligen Führungsprofil beweglich. Als Übertragungsmittel für die Mitnehmerschlitten dienen biegeelastische, zug- und drucksteife Zahnstangen. Es können jedoch auch Bowdenzüge, Gewindewellen, Seil- oder Riementriebe vorgesehen werden. Die Synchronisation der Mitnehmerschlitten erfolgt mittels einer elektronischen Steuerung über zwei getrennte elektrische Antriebsmotoren für beide Seiten der Laderaumabdeckung.

Eine derartige Synchronisation ist verhältnismäßig teuer in der Herstellung und erfordert einen hohen Montageaufwand.

Die getrennte Anordnung zweier elektrischer Antriebsmotoren erfordert zudem eine aufwendige Justage und Kalibrierung des Systems. Weiterhin wird durch die Verwendung zweier separater elektrischer Antriebsmotoren entsprechender Bauraum im Kraftfahrzeug benötigt, der zu einer Gewichtserhöhung des Fahrzeugs beiträgt.

Zudem ist die Kraftübertragung zwischen Antriebsmotor und Mitnehmern mittels zug- und drucksteifen Kraftübertragungsmitteln, wie etwa innerhalb starrer Führungsrohre verlaufender Steigungskabel nur bedingt an unterschiedliche Einbaumaße verschiedener Kraftfahrzeugtypen oder-Modelle anpassbar. Solch biegesteife Führungs- und Kraftübertragungsmittel beanspruchen ein hohes Maß an Bauraum und sind aufgrund ihres sperrigen unflexiblen Aufbaus bei der Montage nur recht schwierig handhabbar.

Ein solch sperriger interner Aufbau eines Antriebssystems macht sich zudem beim Transport von einem Automobilzulieferer zum Endkunden, dem Automobilhersteller, als nachteilig bemerkbar. Denn der sperrige Aufbau eines solchen Antriebssystems erzwingt einen recht aufwendigen und somit kostenintensiven Transport zwischen der Fertigungsstätte des Antriebsmoduls beim Zulieferer und der Endmontage des Kraftfahrzeuges beim Automobilhersteller.

Aus der EP 0 941 176 B1 ist weiterhin ein Abdeckrollo zum Abdecken des Laderaums von Personenkraftwagen bekannt, bei der eine zwei Endlagen für den Zugstab aufweisende Zwangsführungseinrichtung vorgesehen ist. Diese ist derart gestaltet, dass die Rollobahn selbsttätig in eine Zwischen- oder Komfortstellung überführbar ist, in welcher ein vergrößerter Zugang zu dem unter der Abdeckplane befindlichen Laderaum geschaffen wird. In der EP 0 941 176 B1 werden unterschiedliche Ausführungen beschrieben, bei welchen ein Benutzer vor dem Schließen einer Fahrzeugheckklappe die Laderaumöffnung mittels des Abdeckrollos abdeckt. Dabei wird dessen Zugstange etwa manuell in eine Schließstellung überführt, wobei durch eine recht aufwendige Mechanik beim Schließen der Fahrzeugheckklappe die Zugstange in einen weiteren Zustand gebracht wird, in welchem die Zugstange abhängig von der Stellung der Heckklappe in der Schließstellung gehalten ist. Beim Öffnen der Heckklappe wird somit das Abdeckrollo unmittelbar und selbsttätig in die halb geöffnete Zwischenstellung überführt. Eine derartige Vorrichtung erfordert eine Vielzahl miteinander zusammenwirkender mechanischer Bauteile. Sie ist aufwendig in der Herstellung, wartungsintensiv und wohl auch störanfällig.

Aus der DE 199 10 830 C1 ist ein Sonnenschutz für ein Fahrzeugdach bekannt, mit einer unterhalb eines Glasschiebedachs angeordneten Rolloeinrichtung mit einer Rollobahn. Eine Endkante der Rollobahn ist an der Wickelspule befestigt, die im Bereich eines Querrandes der Dachöffnung angeordnet ist und auf die die Rollobahn aufwickelbar ist. An der anderen Endkante der Rollobahn ist ein Zugspiegel befestigt, welcher mit seitlich vorspringenden Führungsschuhen in Führungsschienen geführt ist, welche ihrerseits in seitlichen Rahmenteilen der rechteckigen Rahmenanordnung an der Innenseite des Fahrzeugdachs vorgesehen sind. An den Führungsschuhen sind Seile befestigt, welche um eine Umlenkeinrichtung geführt, an seitlichen Außenenden der Wickelspule befestigt und auf diese aufwickelbar sind. Die Umlenkeinrichtungen bestehen jeweils aus einem Paar von Rollen, welche an einem Lagerblock drehbar gelagert sind, der seinerseits mit dem vorderen Rahmenteil der Rahmenanordnung über Druckfedern fest verbunden ist. Die Druckfedern sorgen dafür, dass der Verbund aus Rollobahn und Seilen stets unter Zugspannung gehalten ist, so dass die Rollobahn in jeder Position, ebenso wie die Seile, gespannt ist.

Aus der DE 20 2004 020 106 U1 ist ein Fensterrollo für ein Fahrzeugfenster bekannt, mit einer Rollobahn, die einen an einer drehbar gelagerten Wickelwelle befestigten Abschnitt und einen von der Wickelwelle entfernten Abschnitt aufweist, der über einen Zugspriegel mit Gleitelementen oder Schlitten verbunden ist, die in seitlichen, parallel zueinander verlaufenden Führungsschienen längsverschiebbar geführt sind. Das Abziehen der Rollobahn von der Wickelwelle erfolgt über druck- und/oder biegesteife Betätigungsmittel, beispielsweise in Form von flexiblen Schubstangen, drucksteifen Zahnriemen oder Steigungskabeln, die von einer Antriebseinrichtung betätigt werden. Um eine gleichmäßige Anlage des der Wickelwelle entgegengesetzten Rollobahnabschnittes an der oberen Fensterrahmenkante und eine gleichmäßige Straffung der von der Wickelwelle abgezogenen Rollobahn zu gewährleisten, ist für eine synchrone Bewegung der Gleitelemente ein Längenausgleich zwischen den von der Antriebseinrichtung zu den Gleitelementen führenden druck- und/oder biegesteifen Betätigungsmitteln vorgesehen, indem die Antriebsstränge gegenläufig zueinander verlängert bzw. verkürzt werden.

Weitere Abdeck- und Rollovorrichtungen sind aus der DE-C-19910830, der DE-A-10123420, der EP-A-1279537, der DE-C-19944948, der WO-A-98/24657, der DE-A-10224157, der EP-A-1334875, der DE-U-202006019796, der JP-A-11286243, der DE-A-10216186, der DE-A-10123420, der DE-B-10151068, der DE-U-202004007896, der DE-C-19836705, der DE-U-7819208, der DE-B-10356911, der DE-A-10 2005 049 999, der DE-A-1386784, der DE 198 25 353 C2 und der DE 10 2006 047 348 A1 bekannt.

### Aufgabe

Der vorliegenden Erfindung liegt die Aufgabe zugrunde, eine Laderaumabdeckvorrichtung für den Kraftfahrzeuginnenraum zur Verfügung zu stellen, die eine möglichst platzsparende und flexible Anordnung im Kraftfahrzeug ermöglicht und auch bei längerem Einsatz einwandfrei verfahrbar ist.

### Erfindung und vorteilhafte Wirkungen

Die der Erfindung zugrunde liegende Aufgabe wird mittels einer Laderaumabdeckvorrichtung gemäß Anspruch 1 gelöst. Weitere vorteilhafte Ausführungsformen der Erfindung sind in den jeweiligen Unteransprüchen angegeben.

Danach betrifft die Erfindung eine Laderaumabdeckvorrichtung für den Kraftfahrzeuginnenraum mit einer flächig aufspannbaren, auf einer drehbar gelagerten Wickelwelle aufrollbaren Abdeck- oder Rollobahn, an der eine Zugstange angeordnet ist, die mit ihren gegenüberliegenden Endabschnitten zwischen zwei im Wesentlichen parallel zueinander verlaufenden Führungsschienen zwangsgeführt ist und die mit einem Verstellantrieb koppelbar ist. Zur Kopplung der Zugstange mit dem Verstellantrieb ist an jeder Führungsschiene zur Überführung der Zugstange von einer Ausgangs- in eine Endstellung ein lediglich ein einziger im bisherigen Kontext als zweiter Mitnehmer bezeichneter Mitnehmer vorgesehen. Dieser Mitnehmer kann zur unidirektionalen Kopplung zwischen Antrieb und Zugstange Verwendung finden, insbesondere, um die Zugstange in eine Endstellung zu überführen. Der zweite Mitnehmer kann aber auch fest oder lösbar mit der Zugstange gekoppelt werden, so dass eine bidirektionale Bewegung dieses Mitnehmers auch unmittelbar auf die Zugstange übertragen werden kann. Prinzipiell ist diese, lediglich einen einzigen Mitnehmer je Führungsschiene aufweisende Ausführungsform bereits dazu geeignet, die Zugstange bidirektional, d. h. sowohl in ihre Ausgangs- als auch in ihre Endstellung und zurück zu überführen. Beispielsweise kann hierzu vorgesehen sein, die mit der Abdeckbahn verbundene Zugstange lösbar am Mitnehmer anzuordnen, diese beispielsweise am Mitnehmer einzuclipsen oder mittels formflüssiger Verbindungsmittel, etwa mit Hilfe einer am Mitnehmer ausgebildeten Hinterschneidung am Mitnehmer zu fixieren. Die Befestigung von Zugstange und Mitnehmer ist derart ausgebildet, dass der Mitnehmer im Wesentlichen eine Auszugsbewegung auf die Zugstange ausübt, während ein im Bereich der Wickelwelle angeordneter Federmechanismus, etwa ein Federmotor eine entgegenwirkende Rückstellkraft auf die Zugstange ausübt. Der Mitnehmer einer jeden Führungsschiene ist dabei mittels eines flexibel ausgebildeten Zugmittels in Form eines Seilzuges, an den Verstellantrieb gekoppelt. Dem Zugmittel, welches eine translatorische Kopplung zwischen dem Verstellantrieb und dem entlang der Schiene verfahrbaren Mitnehmer zur Verfügung stellt ist eine Längennachstellvorrichtung zugeordnet. Diese dient der Kompensation etwaiger betriebsbedingt auftretender Längungen oder einer Dilatation des Zugmittels. Ist das Zugmittel als Seilzug ausgebildet, so unterliegt dessen als Seillitze ausgebildeter Innenzug im fortwährenden Gebrauch aufgrund von Alterungsprozessen und fortwährender Belastung einer Längung, die einige Millimeter wenn nicht gar Zentimeter betragen kann. Eine solche Längung führt zu einer Systemlosen oder Seillosen im Kraftübertragungsstrang, welche nachteilige Auswirkungen auf den gesamten Verstellmechanismus haben kann. Wird die System- oder Seillose nicht kompensiert, so wird diese zu Beginn einer einsetzenden Verstellbewegung zunächst aufgebraucht, bevor über das Zugmittel eine Verstellbewegung auf den Mitnehmer übertragen werden kann. Mittels der Längennachstellvorrichtung kann eine etwaige auftretende System- oder Seillose kompensiert werden, so dass der Seilzug in jeder denkbaren Betriebsstellung stets unter einer erforderlichen Spannung steht, so dass mit Einsetzen einer vom Stellantrieb initiierten Drehbewegung diese unmittelbar auf eine entsprechende Verstellbewegung der Mitnehmer übertragen werden kann. Bei der Ausgestaltung des Zugmittels als Betätigungszug mit einem in einem Außenschlauch geführten Innenzug bewirkt die Längennachstellvorrichtung eine der betriebsbedingten Längung des Innenzugs entsprechende "virtuelle" Verlängerung des den Innenzug umhüllenden Schlauchs. Eine Längennachstellvorrichtung weist typischerweise zwei in Axialrichtung, d.h. in Richtung der Seilzugerstreckung gegeneinander verschiebbare Komponenten, etwa eine Hülse und einen in einer Hülse geführten Fortsatz auf, wobei beide Komponenten mit der Hülle oder dem Schlauch des Betätigungszuges verbunden sind.

Der Fortsatz und die den Fortsatz aufnehmende Hülse weisen typischerweise einander korrespondierende Rastelemente auf oder sind mit separaten Rastelementen gekoppelt, die ein Auseinanderziehen, d. h. ein axiales Verlängern der Längennachstellvorrichtung ermöglichen, aber eine entgegengerichtetes Zusammenschieben der beiden Komponenten verhindern.

Das Auseinanderziehen der Längennachstellvorrichtung, bzw. das in Axialrichtung gerichtete Herausbewegen des Fortsatzes aus einer Hülse heraus kann unter Einwirkung einer Feder erfolgen, so dass bei Auftreten einer Systemlosen, etwa in Folge einer betriebsbedingten Längung des Innenzuges, die beiden Komponenten der Längennachstellvorrichtung selbsttätig um eine vorgegebenes Maß auseinander bewegt werden. Durch eine entsprechende Längung des den Innenzug umgebenden Schlauchs kann die System- oder Seillose kompensiert werden, so dass der gesamte Betätigungszug wieder unter der erforderlichen Spannung steht.

Es ist ferner vorgesehen, dass auch die beiden, an unterschiedlichen Führungsschienen verfahrbaren Mitnehmer über das Zugmittel unmittelbar miteinander gekoppelt sind. Die Kopplung der beiden Mitnehmer über das Zugmittel ist hierbei derart, dass bei einer Betätigung des Verstellantriebs die Zugmittel eine zueinander gleichgerichtete und synchrone Bewegung ausführen.

Durch das Vorsehen eines flexibel ausgebildeten Zugmittels kann in vorteilhafter Weise eine universelle, an unterschiedlichste Einbaumaße und Einbauanforderungen anpassbare Verstelleinrichtung für ein Abdeckrollo zur Verfügung gestellt werden, welches mit lediglich einem einzigen Verstellantrieb auskommt. Es ist hierbei insbesondere vorgesehen, dass der zweite Mitnehmer lediglich eine unidirektionale Verstellbewegung auf die Zugstange, nämlich in Richtung zu deren Endstellung ausübt. Zum Öffnen der Abdeckvorrichtung, insbesondere zum Herausführen der Zugstange aus ihrer Endstellung ist ein im Bereich der Wickelwelle, innerhalb einer Wickelkassette angeordneter Federmotor vorgesehen.

Erfindungsgemäß ist das flexible, als Seilzug ausgebildete Zugmittel an einem stirnseitigen Endabschnitt der Führungsschienen angelenkt und an einem dem Endabschnitt gegenüberliegenden Abschnitt über eine Umlenkung geführt. Mittels der Umlenkung wird die Seele des Seilzugs von einer am Endabschnitt der Führungsschiene vorgesehenen Schlauchfassung bis zur Umlenkrolle und von dort wieder zurück zu einer weiteren, am Endabschnitt der Führungsschiene vorgesehenen Schlauchfassung geführt.

An jeden der beiden Seilzugstränge einer Führungsschiene ist jeweils ein Mitnehmer angebunden, der zumindest zum Überführen der an der Führungsschiene zwangsgeführten Zugstange in deren Endstellung vorgesehen ist. Die Ausbildung eines flexiblen Seilzugs als Bewegungs- oder Kraftübertragungsmittel vom Verstellantrieb auf die Mitnehmer und somit auf die Zugstange ist gegenüber drucksteifen Zug-Druckmitteln, wie etwa Gewindespindeln, Zahnstangen oder Steigungskabeln von Vorteil, da infolge der Umlenkung eine bidirektionale Bewegung der Mitnehmer bereits durch Einleitung einer Zugkraft auf einen der Seilzugstränge erfolgen kann.

Nach einer vorteilhaften Weiterbildung der Erfindung ist vorgesehen, das Zugmittel als geschlossenen umlaufenden Seilzug auszubilden, an welchem die mit der Zugstange in Wirkverbindung stehenden Mitnehmer einer jeden Führungsschiene gekoppelt ist, wobei dieser zwischen den Schienen vorzugsweise über Kreuz verlaufende Seilzug eine Kopplung beider Mitnehmer an den gemeinsamen Verstellantrieb zur Verfügung stellt. Hierdurch kann eine synchrone Bewegung der an den parallel verlaufenden Führungsschienen geführten Mitnehmer zur Verfügung gestellt werden.

Anstelle einer Ausbildung eines einzigen über Kreuz verlaufenden Seilzugs können auch zwei getrennte Seilzüge vorgesehen werden, welche einerseits an je einem Mitnehmer und andererseits an einem gemeinsamen Verstellantrieb für beide Seilzüge angelenkt sind.

Von Vorteil ist weiterhin die Kopplung zwischen dem Verstellantrieb und dem Zugmittel mittels einer Seiltrommel. Die Seiltrommel, welche typischerweise mit einem Getriebemotor in Wirkverbindung steht, bewirkt, dass die Seele des Seil-oder Betätigungszugs in beide Richtungen, bezogen auf den die Seele umschließenden äußeren Schlauch, verschoben werden kann.

Bei einer Ausgestaltung mit zwei einzelnen Seilzügen ist es ferner von Vorteil, jeden dieser Seilzüge mittels einer einzigen Seiltrommel an den gemeinsamen Antrieb zu koppeln. Diese Seiltrommel kann dabei als zweigeteilte Seiltrommel ausgebildet sein mit axial voneinander beabstandeten und zueinander drehfest angeordneten Seiltrommelabschnitten, welche zur Aufnahme je eines Seilzuges ausgebildet sind.

Die beiden Seiltrommelabschnitte können dabei bezogen auf die Drehachse der Seiltrommel axial voneinander beabstandet oder axial nebeneinander zu liegen kommend angeordnet sein. Auf diese Art und Weise kann auf beide Seilzüge bei Betätigung des Verstellantriebes eine synchrone Bewegung aufgeübt werden.

Von Vorteil ist es dabei, wenn jedem der beiden Seilzüge eine gesonderte Längennachstellvorrichtung zugeordnet ist. Dabei kann insbesondere vorgesehen sein, die Längennachstellvorrichtung unmittelbar am Seiltrommelgehäuse anzuordnen oder in dieses zu integrieren.

Die Laderaumbdeckvorrichtung ist zum Abdecken des Laderaums eines Kraftfahrzeugs, insbesondere eines Personenkraftwagens vorgesehen. Die Laderaumabdeckvorrichtung weist eine auf- und abrollbare Abdeckbahn, wie etwa eine Rollobahn auf, die auf eine drehbar gelagerte, innerhalb einer Wickelkassette angeordnete Wickelwelle aufrollbar ist. An dem aus der Wickelkassette ausziehbaren Endabschnitt der Abdeckbahn ist eine sich quer oder senkrecht zur Ausrollrichtung verlaufende Zugstange angeordnet, die ihrerseits mit ihren gegenüberliegenden Endabschnitten zwischen den Führungsschienen zwangsgeführt und im Bereich der Führungsschiene mit einem Verstellantrieb koppelbar ist. Nach einer bevorzugten Ausführungsform der Erfindung ist ein Verriegelungsglied vorgesehen, welches wahlweise in eine Verriegelungsstellung oder Lösestellung überführt werden kann.

In seiner Verriegelungsstellung ist das Verriegelungsglied dazu ausgebildet, die an der Führungsschiene zwangsgeführte Zugstange in einer Endstellung zu fixieren. Es kann zumindest ein erster entlang der Führungsschiene verfahrbarer Mitnehmer vorgesehen sein, der zumindest dazu ausgebildet ist, das Verriegelungsglied von seiner Verriegelungsstellung in die Lösestellung zu überführen, in welcher das Verriegelungsglied die Zugstange freigibt.

Der entlang der Führungsschiene verfahrbare Mitnehmer dient somit nicht ausschließlich, wie im Stand der Technik üblich, einer Kopplung zwischen dem Verstellantrieb und der Zugstange, sondern er kann im Rahmen der Erfindung auch als Entriegelungsglied zum Entriegeln und Freigeben der Zugstange dienen.

Der zumindest erste Mitnehmer ist beim Entriegelungsvorgang in unmittelbarer Wirkverbindung mit dem Verriegelungsglied. Somit sind zum Entriegeln der Zugstange lediglich zwei miteinander in Wirkverbindung tretende mechanische Komponenten, nämlich das Verriegelungsglied selbst und der erste Mitnehmer erforderlich. Der erste Mitnehmer ist dabei dazu vorgesehen, infolge einer entlang der Führungsschiene verlaufenden Verstellbewegung derart mit dem Verriegelungsglied zusammen zu wirken, dass dieses von der Verriegelungsstellung in die Entriegelungs- oder Lösestellung überführt wird.

Dieser Lösemechanismus ist daher besonders wartungsarm und kaum störanfällig. Zudem kann der Entriegelungsmechanismus besonders kostengünstig implementiert werden, da hierzu lediglich ein besonders ausgestalteter erster Mitnehmer an einer ohnehin vorhandenen Führungsschiene geführt werden muss.

Die in einer Wickelkassette aufgenommene Wickelwelle der Abdeck- oder Rollobahn ist mit einem Federmechanismus, vorzugsweise mit einem Federmotor ausgestattet, wobei das Abrollen bzw. Aufspannen der Abdeckbahn gegen die Federkraft erfolgt. Hierdurch kann ein zumindest bereichsweises selbsttätiges Aufrollen der Abdeckbahn erfolgen, wenn das Verriegelungsglied infolge der Verfahrbewegung des ersten Mitnehmers die Zugstange aus der Endstellung freigibt. Es ist hierbei insbesondere vorgesehen, dass die Abdeckbahn oder das Abdeckrollo infolge einer Entriegelung aus der Endstellung in eine sogenannte Komfortstellung überführt werden kann, in welcher der beispielsweise unter der Abdeckbahn befindliche Laderaum eines Kraftfahrzeugs zumindest bereichsweise zum Be- oder Entladen freigegeben wird.

Nach einer ersten Weiterbildung der Erfindung ist der erste Mitnehmer mit dem Verstellantrieb gekoppelt. Dies hat den Vorteil, dass zum Entriegeln der Zugstange aus ihrer Endstellung kein separater Stellmotor erforderlich ist, sondern dass der ohnehin zum Verstellen der Abdeckbahn vorhandene Verstellantrieb universell auch zum Initiieren einer Entriegelung Verwendung finden kann. Auf diese Art und Weise kann die gesamte Laderaumabdeckvorrichtung mit lediglich einem einzigen Verstellantrieb verwirklicht werden.

Nach einer weiteren Ausführungsform der Erfindung ist ein zweiter, ebenfalls entlang der Führungsschiene verfahrbarer Mitnehmer vorgesehen, der zumindest dazu ausgebildet ist, die Zugstange entlang ihrer Zwangsführung in die Endstellung zu überführen. Dieser zweite Mitnehmer wirkt somit unmittelbar auf die zwangsgeführte Zugstange ein, während der erste Mitnehmer für ein Zusammenwirken mit dem Verriegelungsglied vorgesehen ist. Der zweite Mitnehmer ist zumindest derart an der Führungsschiene gegenüber der Zugstange positioniert und ist auch derart ausgestaltet, sodass die Zugstange mittels dieses zweiten Mitnehmers zumindest in einer Richtung, nämlich entlang der Auszugsrichtung, entlang der Führungsschiene bewegt werden kann.

Nach einer weiteren vorteilhaften Ausführung der Erfindung ist vorgesehen, dass der erste und der zweite Mitnehmer unmittelbar mit dem Verstellantrieb gekoppelt sind. Die Kopplung des ersten und des zweiten Mitnehmers an der Führungsschiene ist dergestalt, dass die beiden Mitnehmer im Betrieb des Verstellantriebs zueinander entgegengerichtete Verstellbewegungen entlang der Führungsschiene ausführen.

Bei aktiviertem Verstellantrieb bewegen sich die beiden entlang einer gemeinsamen Mitnehmerschiene vorgesehenen Mitnehmer aufeinander zu und/oder voneinander weg. Die Anbindung des ersten und des zweiten Mitnehmers an der Führungsschiene ermöglicht ein aneinander Vorbeiführen der Mitnehmer. Es ist hierbei insbesondere vorgesehen, dass die Mitnehmer an unterschiedlichen Seiten der Führungsschiene oder an derselben Seite der Führungsschiene, dann aber in unterschiedlicher Höhe daran gleitend gelagert sind. Die Anordnung der beiden Mitnehmer an derselben, beispielsweise der Abdeckbahn zugewandten Seite der Führungsschiene ermöglicht einen Bauraum einsparenden Aufbau der gesamten Abdeckvorrichtung, insbesondere im Bereich der vorzugsweise in einer D-Säule eines Kraftfahrzeugs unterzubringenden Führungsschiene.

Nach einer besonders vorteilhaften Ausgestaltung der Erfindung ist das Verriegelungsglied als schwenkbar gelagerte Sperrklinke mit einer Anlaufschräge ausgebildet. Diese Anlaufschräge wirkt beim Überführen der Zugstange in die Endstellung mit einem Zugstangenabschnitt derart zusammen, dass die Sperrklinke beispielsweise gegen die Schwerkraft oder gegen eine Federkraft aus ihrer Verriegelungsstellung zumindest zeitweise derart angehoben wird, dass die Zugstange ihrerseits in die vorgesehene Endstellung überführt werden kann, in welcher die Sperrklinke wieder ihre Verriegelungsstellung einnimmt und ein selbsttätiges Bewegen der Zugstange aus der Endstellung heraus verhindert.

In ihrer Endstellung kommt die Zugstange dann beispielsweise an einer Hinterschneidung der Sperrklinke, welche sich vorzugsweise an die Anlaufschräge anschließt, zu liegen. Die Freigabe der Zugstange und damit der mit der Zugstange verbundenen Abdeckbahn erfolgt über eine Schwenkbewegung des Verriegelungsglieds in dessen Lösestellung. Dies kann entweder manuell oder durch den ersten Mitnehmer initiiert erfolgen.

Nach einer Weiterbildung der Erfindung weist der erste Mitnehmer eine Schrägfläche auf, die mit einer korrespondierenden Schrägfläche des Verriegelungsglieds zusammenwirkt, sodass das Verriegelungsglied infolge einer entsprechenden Verstellbewegung entlang der Führungsschiene von der Verriegelungsstellung in die Lösestellung überführt wird. Die mit dem ersten Mitnehmer zusammenwirkende Schrägfläche des Verriegelungsglieds als auch dessen mit der Zugstange in Wirkverbindung tretende Anlaufschräge können zwar zusammenfallen.

Von Vorteil ist es jedoch, wenn die Schrägfläche des Verriegelungsglieds, welche mit einer korrespondierenden Schrägfläche des ersten Mitnehmers zusammenwirkt und die Anlaufschräge des Verriegelungsglieds, bezogen auf die Schwenkachse des Verriegelungsglieds zueinander axial versetzt ausgebildet sind. Hierbei ist insbesondere von Vorteil, wenn die Anlaufschräge und die Schrägfläche des Verriegelungsglieds unterschiedliche Winkel aufweisen, sodass insbesondere beim durch den ersten Mitnehmer initiierten Überführen des Verriegelungsglieds in die Lösestellung das Verriegelungsglied eine größere Schwenkbewegung ausführt, als wenn es durch das Überführen der Zugstange in deren Endstellung in die Lösestellung überführt wird.

Dadurch, dass der erste Mitnehmer eine größere Verschwenkbewegung auf das Verriegelungsglied ausübt, kann die Zugstange bei einer durch den ersten Mitnehmer gehaltenen Lösestellung des Verriegelungsglieds reibungs- und berührungsfrei am Verriegelungsglied vorbeigeführt werden.

Nach einer Weiterbildung der Erfindung ist vorgesehen, dass die am ersten Mitnehmer vorgesehene Schrägfläche als ein von der Führungsschienenebene weg weisender Vorsprung des Mitnehmers ausgebildet ist. Dieser sich im Wesentlichen senkrecht zur Schienenebene erstreckende Vorsprung ermöglicht, dass der erste Mitnehmer beim Überführen des Verriegelungsglieds in dessen Lösestellung zumindest abschnittsweise in einen Bereich zwischen dem Verriegelungsglied und der Führungsschiene hineinfahren kann.

Nach einer Weiterbildung der Erfindung ist vorgesehen, dass das Verriegelungsglied eine konvex gewölbte Aufnahme für die Zugstange aufweist, in welcher die Zugstange in ihrer Endstellung zu liegen kommt, insbesondere dann, wenn sich das Verriegelungsglied in seiner Verriegelungsstellung befindet. Die konvex gewölbte, dem Querschnittsprofil der Zugstange angepasste Aufnahme des Verriegelungsglieds unterstützt eine sichere und möglichst spielfreie Fixierung der Zugstange in ihrer Endstellung.

Die konvex gewölbte Aufnahme des Verriegelungsglieds bewirkt hierbei insbesondere eine Fixierung der Zugstange hinsichtlich etwaiger Bewegungen senkrecht oder quer zur Längserstreckung der Führungsschiene.

Nach einer Weiterbildung der Erfindung ist vorgesehen, dass das zweite Mitnehmerelement einen als Mitnehmeranschlag ausgebildeten Vorsprung aufweist, an welchem zumindest an der dem Verriegelungsglied zugewandten Seitenfläche eine Aufnahme ausgebildet ist. Diese, vorzugsweise konvex gewölbte Aufnahme ist zur Aufnahme des Zugstangenprofils ausgebildet. Die mitnehmerseitige Aufnahme weist daher eine mit dem Querschnittsprofil der Zugstange korrespondierende Wölbung auf.

Vorteilhaft bei dieser Ausbildung ist insbesondere, dass der zweite Mitnehmer nicht fest mit der Zugstange gekoppelt ist, sondern dazu ausgebildet ist, die Zugstange lediglich in einer Bewegungsrichtung entlang der Führungsschiene zu verfahren. Der zweite Mitnehmer ist demgemäß derart an der Führungsschiene angeordnet, dass sich die Zugstange stets zwischen dem zweiten Mitnehmer und dem Verriegelungsglied befindet. Sobald die Zugstange vom Verriegelungsglied in ihrer Endstellung gehalten wird, kann der zweite Mitnehmer wieder in eine, beispielsweise dem Verriegelungsglied gegenüberliegende Position an der Führungsschiene verfahren werden.

Die Aufnahme für die Zugstange an dem zweiten Mitnehmer kann derart ausgebildet sein, dass sie die Zugstange nur bereichsweise, in Umfangsrichtung bis etwa 90° umfasst, sodass die Zugstange, wenn sie mittels des zweiten Mitnehmers in ihre Endstellung verfahren worden ist, nahtlos von der Aufnahme des Verriegelungsglieds aufgenommen werden kann. Es ist hierbei insbesondere vorgesehen, dass der zweite Mitnehmer, bzw. der am zweiten Mitnehmer ausgebildete Vorsprung am Verriegelungsglied vorbeigeführt werden kann, und dass der zweite Mitnehmer, bzw. der daran ausgebildete Vorsprung in einer Ebene parallel zur Führungsschienenebene verfahrbar sind, die außerhalb der Schwenkebene des Verriegelungsglieds liegt. Hierdurch können insbesondere Kollisionen zwischen dem Verriegelungsglied und dem zweiten Mitnehmer umgangen und verhindert werden.

Nach einer weiteren vorteilhaften Ausgestaltung der Erfindung sind der erste und der zweite Mitnehmer über ein Zugmittel unmittelbar miteinander gekoppelt, wobei das Zugmittel zwischen dem ersten und dem zweiten Mitnehmer über eine Umlenkrolle geführt ist. Diese Umlenkrolle ist vorzugsweise an dem dem Verriegelungsglied gegenüberliegenden Endabschnitt der Führungsschiene angeordnet. Mittels der Umlenkrolle ist das mit beiden Mitnehmern verbundene und mit dem Verstellantrieb koppelbare Zugmittel an der Führungsschiene in zwei Zugmittelabschnitte unterteilt, die sich bei wahlweiser Zugbeanspruchung auf einen der Zugmittelabschnitte zwar parallel aber in entgegengesetzten Richtungen zueinander bewegen.

Durch entsprechende Anlenkung des ersten oder des zweiten Mitnehmers an die unterschiedlichen Zugmittelstränge kann die geforderte gegenläufige Kopplung der beiden Mitnehmer an einer Führungsschiene in besonders einfacher Art und Weise zur Verfügung gestellt werden

Nach einer Weiterbildung der Erfindung ist vorgesehen, dass im Wesentlichen zwei parallel zueinander angeordnete Führungsschienen mit je einem ersten und je einem zweiten Mitnehmer und mit jeweils einer Umlenkrolle vorgesehen sind. Diese beiden im Wesentlichen parallel zueinander angeordneten Führungsschienen werden bei der Implementierung der Abdeckvorrichtung als Laderaumabdeckung eines Kraftfahrzeugs vorzugsweise in den beiden D-Säulen des Kraftfahrzeugs angeordnet.

Die mechanische Kopplung des Verstellantriebs mit den beiden Mitnehmern erfolgt dabei mittels einer Seilrolle und einem geschlossen ausgebildeten Betätigungszug. Das heißt, der Betätigungszug wird jeweils mit zwei Schlauchfassungen an einen Endabschnitt der Führungsschiene gekoppelt, sodass sein Innenzug über die am entgegengesetzten Ende der Führungsschiene angeordnete Umlenkrolle geführt wird. Die Betätigungszuganbindung an die beiden Führungsschienen ist hierbei gekreuzt, sodass die ersten Mitnehmer der beiden parallel verlaufenden Führungsschienen als auch die zweiten Mitnehmer zueinander eine synchrone Bewegung bei Aktivierung des Verstellantriebs ausführen.

### Ausführungsbeispiele

Weitere Ziele, Merkmale sowie vorteilhafte Anwendungsmöglichkeiten der Erfindung ergeben sich aus der nachfolgenden Beschreibung von Ausführungsbeispielen anhand der Zeichnungen. Dabei bilden alle beschriebenen und/oder bildlich dargestellten Merkmale in ihrer sinnvollen Kombination den Gegenstand der vorliegenden Erfindung, auch unabhängig von den Patentansprüchen und deren Rückbezügen.

Es zeigen:
- Figur 1 :: eine schematische perspektivische Darstellung der erfindungsgemäßen Laderaumabdeckvorrichtung,
- Figur 2 :: eine Seitenansicht einer Führungsschiene beim Überführen der Zugstange in die Endstellung mittels des zweiten Mitnehmers,
- Figur 3 :: die Führungsschiene gemäß Figur 2 unmittelbar vor dem Überführen des Verriegelungsglieds in die Lösestellung mittels des ersten Mitnehmers,
- Figur 4 :: die Führungsschiene gemäß der Figuren 2 und 3 , mit dem Verriegelungsglied in Lösestellung und
- Figur 5 :: ein weiteres Ausführungsbeispiel einer Kopplung zwischen Antrieb und Mitnehmern mittels zweier Seilzüge.

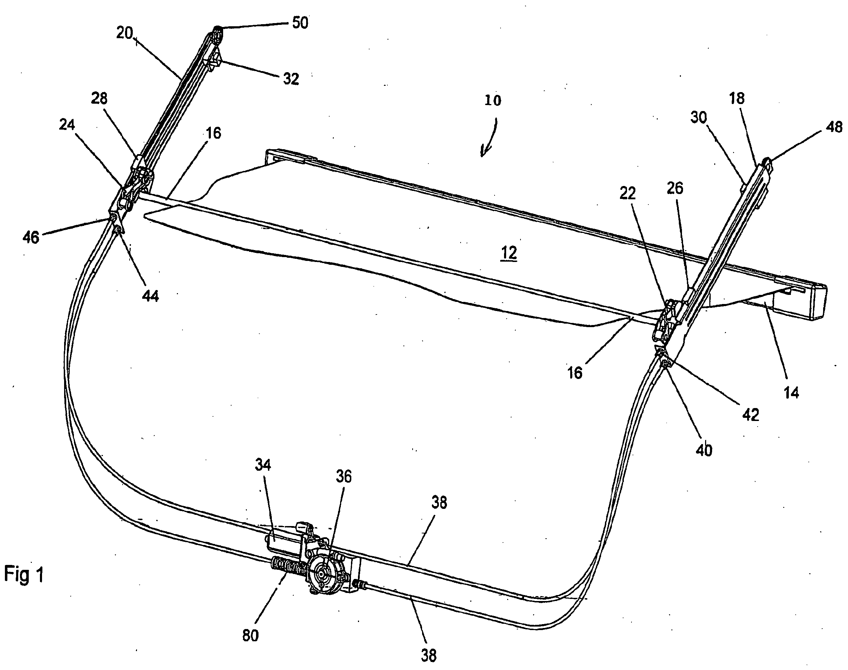

Die perspektivische Darstellung der Abdeckvorrichtung 10 gemäß Figur 1 zeigt eine in einer Wickelkassette 14 auf einer (nicht dargestellten) Wickelwelle aufrollbare Abdeck- oder Rollobahn 12, die mit ihrem aus der Wickelkassette 14 herausziehbaren Endabschnitt mit einer im Wesentlichen parallel zur Wickelwelle bzw. zur Längserstreckung der Wickelkassette 14 verlaufenden Zugstange 16 gekoppelt ist. Die Zugstange 16 ist mit ihren beiden gegenüberliegenden Endabschnitten in zwei parallel zueinander verlaufenden Führungsschienen 18, 20 linear zwangsgeführt.

Die beiden Führungsschienen 18, 20 sind bei erfindungsgemäßer Implementierung der Abdeckvorrichtung als Laderaumabdeckung eines Kraftfahrzeugs vorzugsweise in den D-Säulen angeordnet, welche beispielsweise an eine Heckklappe eines Personenkraftwagens angrenzen.

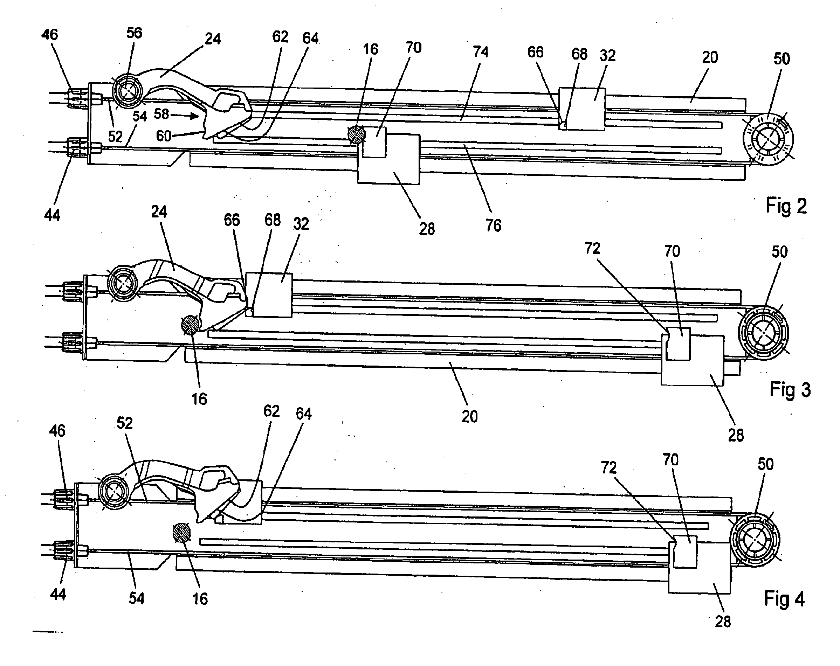

An jeder der beiden Führungsschienen 18, 20 sind an entsprechenden Führungsschlitzen 74, 76 verschiebbare Mitnehmer 32, 28 längsverschieblich geführt, wie dies aus den unterschiedlichen, in den Figuren 2 bis 4 gezeigten Mitnehmerstellungen hervorgeht. Im gezeigten Ausführungsbeispiel ist die Führungsschiene im Wesentlichen geradlinig ausgebildet. Ein gekrümmter, beispielsweise an die Fahrzeuggeometrie angepasster Führungsschienenverlauf ist ebenfalls im Rahmen der Erfindung.

Die Figuren 2 bis 4 zeigen die Führungsschiene 20 von innen, das heißt von der Rollobahn 12 aus gesehen. Das als Betätigungszug ausgebildete Zugmittel 38, welches über eine Seiltrommel 36 mit einem Getriebemotor 34 in mechanischer Wirkverbindung steht, ist über zwei Schlauchfassungen 44, 46 an einen Endabschnitt der Führungsschiene 20 angebunden. Im Bereich der Führungsschiene 20 verläuft die Seele des Betätigungszugs 38 ungeführt über eine am gegenüberliegenden Endabschnitt der Führungsschiene 20 drehbar gelagerte Umlenkrolle 50, sodass die Seele des Betätigungszugs im Bereich der Führungsschiene 20 in einen oberen Strang 52 und in einen unteren Strang 54 unterteilt ist.

Mit dem unteren Strang 54 ist der zweite Mitnehmer 28 gekoppelt, der innerhalb des Führungsschlitzes 76 an der Führungsschiene 20 festgelegt ist, während der erste Mitnehmer 32 am oberen Seilzugstrang 52 und dem oberen Führungsschlitz 74 festgelegt ist.

Die Geometrie der Führungsschiene 20 sowie die Ausbildung und Anordnung von Führungsschlitzen 74, 76 und Mitnehmern 26, 28, 30, 32 ist dergestalt, dass die beiden an einer gemeinsamen Führungsschiene 20 geführten Mitnehmer 28, 32 sowie 26, 30 ungehindert aneinander vorbeigeschoben werden können.

In Figur 2 ist die vom zweiten Mitnehmer 28 auf die Zugstange 16 ausübbare Mitnahmebewegung skizziert. Dabei gelangt ein mit einer Aufnahme 72 ausgebildeter Vorsprung 70 des Mitnehmers 28 mit der zwangsgeführten Zugstange 16 in Anlagestellung, sodass infolge einer Zugausübung auf den Seilzugstrang 54 der Mitnehmer 28 und die damit in Wirkverbindung stehende Zugstange 16 nach links in Richtung zur Endstellung der Zugstange 16 verfahren werden. Diese Endstellung der Zugstange ist beispielsweise in Figur 3 gezeigt.

Beim durch den zweiten Mitnehmer 28 initiierten Überführen der Zugstange 16 in deren Endstellung, gelangt die Außenkontur der Zugstange mit der Anlaufschrägen 64 des an einer Schwenkachse 56 schwenkbar gelagerten Verriegelungsglieds 24 in Anlagestellung. Bei einer weiteren Verfahrbewegung in Richtung zum als Sperrklinke 24 ausgebildeten Verriegelungsglied wird das Verriegelungsglied durch die Ausrichtung und geometrische Ausgestaltung der Anlaufschrägen 64 aus der Verriegelungsstellung angehoben, sodass die Zugstange 16 an dem in den Figuren 2 bis 4 untenliegenden Endabschnitt der Anlaufschräge 64 vorbeigeführt werden kann.
Letztlich wird die Sperrklinke 24 bei Erreichen der in Figur 3 angedeuteten Endstellung der Zugstange 16 entweder schwerkraftbedingt oder mittels einer Federbeaufschlagung wieder in ihre Verriegelungsstellung überführt, in welcher die Zugstange 16 in einer konvex gewölbten Aufnahme 60 der Hinterschneidung 58 der Sperrklinke 24 zu liegen kommt und dort auch, unter anderem durch die an die Kontur der Zugstange 16 vorgesehene Wölbung 60 in Vertikalrichtung, das heißt senkrecht zur Längserstreckung der Führungsschienen 18, 20 fixiert ist.

Der zweite, auf die Zugstange 16 einwirkende Mitnehmer 28 und sein die Zugstangenaufnahme 72 aufweisender Vorsprung 70 sind derart ausgebildet, dass der Mitnehmer 28 bzw. dessen Vorsprung 70 in Axialrichtung zur Zugstange 16 außerhalb eines Bereichs in Wirkverbindung treten, mit welchem die Zugstange 16 mit der Anlaufschräge 64 der Sperrklinke 24 in Anlagestellung gelangt. Dadurch wird insbesondere erreicht, dass der zweite Mitnehmer 28, 26 in einen Bereich eingeführt werden oder eintauchen kann, der zwischen Verriegelungsglied 24, 22 und zugeordneter Führungsschiene 18, 20 liegt.

Der an dem in den Figuren 2 bis 4 oberen Seilzugstrang 52 gekoppelte erste Mitnehmer 32 weist an seinem unteren und dem Verriegelungsglied 24 zugewandten Eckabschnitt einen sich im Wesentlichen senkrecht zur Führungsschienenebene erstreckenden Fortsatz oder Vorsprung 68 auf, der eine mit der Schrägfläche 62 der Sperrklinke 24 in Wirkverbindung tretende und darauf abgestimmte Schrägfläche 66 aufweist. Befindet sich die Sperrklinke, wie in Figur 3 beispielhaft dargestellt, in ihrer Verriegelungsstellung und wird der Mitnehmer 32 infolge einer Zugbeanspruchung auf den Seilstrang 52 weiter in Richtung Schwenkachse 56 der Sperrklinke 24 gezogen, so wird infolge der miteinander in Wirkverbindung tretenden, einander vorbeiführenden Schrägflächen 66, 62 das Verriegelungsglied 24 in die in Figur 4 gezeigte Löse- oder Freigabestellung angehoben, in welcher die Zugstange 16 und die Rollobahn 12 infolge des in der Wickelkassette 14 vorgesehenen Federmotors aus der in Figur 3 gezeigten Endstellung beispielsweise in eine Zwischenstellung, etwa in eine Komfortstellung selbsttätig überführt werden kann.

Die an der Sperrklinke 24 vorgesehenen Schrägflächen, nämlich die Schrägfläche 62 und die Anlaufschräge 64 können, bezogen auf die Axialrichtung der Zugstange 16 oder der Schwenkachse 56 zueinander versetzt angeordnet sein. Hierbei ist insbesondere von Vorteil, wenn die Schrägfläche 62 näher als die Anlaufschräge 64 zur Führungsschiene hin angeordnet ist. Es ist insbesondere vorgesehen, dass die beiden jeweils mit der Zugstange 16 oder mit der Schrägfläche 66 des Mitnehmers 32 in Wirkverbindung tretenden Anlaufschrägen 64 bzw. Schrägflächen 62 eine unterschiedliche Schrägstellung aufweisen.

Insbesondere ist vorgesehen, dass die mit dem ersten Mitnehmer 32 in Wirkverbindung tretende Schrägfläche 62 etwas steiler als die Anlaufschräge 64 ausgebildet ist, sodass bei einem durch den Mitnehmer 32 initiierten Überführen in die Freigabe- oder Lösestellung die Sperrklinke 24 eine etwas größere Hub- oder Schwenkbewegung ausführt, als wenn sie lediglich infolge der Überführung der Zugstange 16 in die Endstellung zeitweilig angehoben wird. Dadurch kann sichergestellt werden, dass die Schubstange 16 berührungsfrei gegenüber dem nach unten spitz zulaufenden Endabschnitt der Sperrklinke 24 beispielsweise in eine Komfortstellung überführt werden kann.

Weiterhin ist die gekreuzte Anordnung des an den beiden Führungsschienen 18, 20 angelenkten, durchgehend und geschlossen ausgebildeten Betätigungszuges 38 von Bedeutung. So ist beispielsweise der mit dem Mitnehmer 32 gekoppelte obere Zugstrang 52 über eine in Figur 2 oben liegende Schlauchfassung an die in Figur 1 links dargestellte Führungsschiene 20 gekoppelt. Anderen Ends ist die Schlauchfassung 46 direkt mit der Schlauchfassung 40 verbunden, diese untere Schlauchfassung und der ihr im Bereich der zugeordneten Führungsschiene 18 verlaufende, hier nicht dargestellte Strang des Betätigungszugs ist mit dem Mitnehmer 30 gekoppelt. Über die Umlenkung 48 läuft dieser Strang des Betätigungszugs über den Mitnehmer 26 und die Schlauchfassung 42 zur Seiltrommel 36 und von dort zur Schlauchfassung 44, zum Seilzugstrang 54 und letztlich zum Mitnehmer 28 der in Figur 1 links dargestellten Führungsschiene 20.

Auch ist der Betätigungszug 38 angrenzend an die Seiltrommel 36 mit einer Seillängennachstellvorrichtung 80 ausgestattet, welche selbsttätig eine betriebsbedingt auftretende Längung oder Dilatation des Seilzuges kompensieren kann , sodass etwaige System- oder Seillosen im Betätigungsstrang beseitigt werden können.

Durch diese gekreuzte Kopplung der Zugstränge 52, 54 und der zugeordneten, an den jeweiligen Führungsschienen 18, 20 festgelegten Schlauchfassungen 40, 42, 44, 46 kann eine synchrone Bewegung gleichartiger Mitnehmertypen, nämlich der Mitnehmer 26 und 28 sowie der Mitnehmer 30 und 32 in besonders einfacher und zuverlässiger Art und Weise zur Verfügung gestellt werden.

Aufgrund der an beiden Führungsschienen 18, 20 vorhandenen Umlenkung 48, 50 ist es auch für ein bidirektionales Verstellen sämtlicher Mitnehmer 26, 28, 30, 32 ausreichend, die Kraftübertragung zwischen dem Verstellantrieb 34 lediglich über ein Zugmittel 38 vorzusehen. Die Umlenkung 48, 50 bewirkt nämlich, dass bei einer Zugbeanspruchung beispielsweise auf den Seilzugstrang 52 der Mitnehmer 32 in der Darstellung gemäß Figur 2 nach links und der Mitnehmer 28 nach rechts verschoben wird. Bei einer Bewegungsumkehr des Verstellantriebs 34 und der zugeordneten Seiltrommel 36 erfolgt eine Bewegungsumkehr dadurch, dass eine entsprechende Zugbewegung auf den anderen an der Führungsschiene 20 vorgesehenen Seilzugstrang 54 ausgeübt wird.

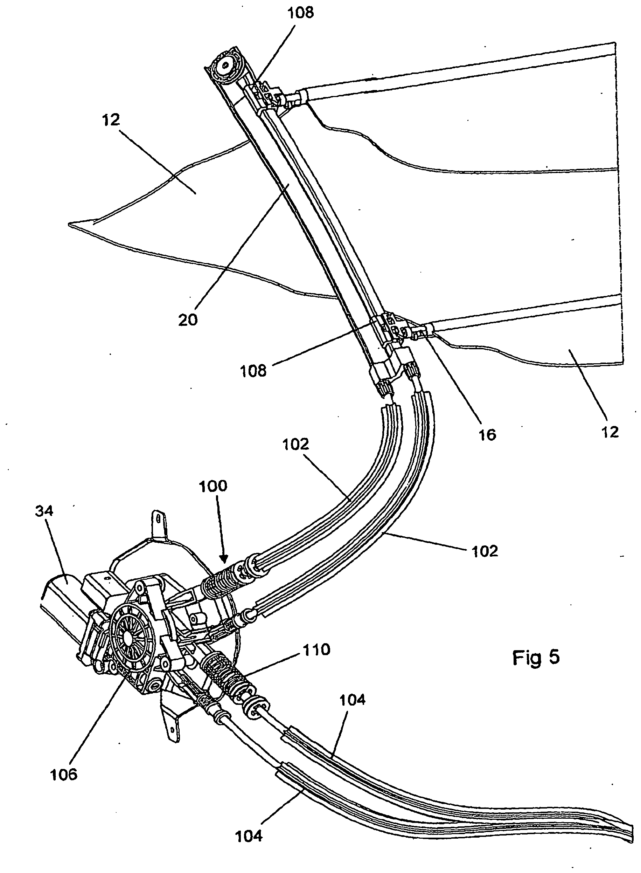

Figur 5 zeigt eine weitere Ausführungsform der Abdeckvorrichtung, wobei auch hier, wie im Vergleich zur Darstellung gemäß Figur 1 zwei Führungsschienen 20, 18 zur Zwangsführung von zumindest zwei Mitnehmern 108 vorgesehen ist, von denen in Figur 5 lediglich nur einer gezeigt ist. Der Mitnehmer 108 ist zwischen den beiden in Figur 5 gezeigten Endstellungen, am unteren und am oberen Ende der Führungsschiene mit Hilfe des Seilzuges 102 verschiebbar.

Hierbei ist vorgesehen, dass der Mitnehmer 108 und die Zugstange 16 lösbar miteinander gekoppelt sind. Hierfür kann der Mitnehmer 108 eine mit einer Hinterschneidung versehene Aufnahme für die Zugstange 16 aufweisen, so dass mit Hilfe des Mitnehmers 108 eine Schließ- und Auszugsbewegung der Abdeckbahn 12 aus deren Wickelwelle heraus erfolgen kann. Die Öffnungsbewegung für die Abdeckbahn, etwa zu deren Komfortstellung hin erfolgt dabei, indem der Mitnehmer 108 aus der in Figur 5 unten liegenden Endstellung in die weiter oberhalb liegende Stellung verschoben wird.

Diese Bewegung wird ferner durch ein typischerweise im Bereich der Wickelwelle angeordnetes Federelement oder einen entsprechenden Federmotor unterstützt, so dass ein selbsttätiges Lösen der Zugstange 16 vom Mitnehmer 108 verhindert werden kann.

Abgesehen von der Ausgestaltung des Mitnehmers 108 unterscheidet sich die Ausführungsform gemäß Figur 5 von derjenigen gemäß Figur 1 dadurch, dass anstelle von einem einzigen Seilzug 38 nunmehr zwei getrennte Seilzüge 102, 104 vorgesehen sind, welche jeweils eine translatorische Verstellbewegung zwischen dem Antrieb 34 und den an den parallel verlaufenden Führungsschienen 18, 20 entlang gleitenden Mitnehmern 108 zur Verfügung stellen.

Beide Seilzüge 102, 104 oder Seilzugstränge sind mit jeweils einer Seillängennachstellvorrichtung 100, 110 ausgestattet, welche sich einen Ends am Gehäuse der mit dem Antrieb 34 gekoppelten Seiltrommelgehäuse 106 abstützen. Der in Figur 5 nicht explizit gezeigte Innenzug der Seilzüge 102, 104 verläuft durch die Seillängennachstellvorrichtungen 100, 110 hindurch, während der zugehörige Außenzug mit einer in Axialrichtung ausziehbaren Komponente der Seillängennachstellvorrichtung 100, 110 verbunden ist.

Tritt eine betriebsbedingte Seillose in einem der beiden Betätigungszüge 102, 104 auf, so bewirkt die selbsttätig arbeitende Seillängennachstellung 100, 110 eine "virtuelle" Verlängerung des den Innenzug umgebenden Außenschlauchs, so dass die auftretende Seillose ohne Eingriff eines Anwenders selbsttätig kompensiert werden kann. Hierdurch werden beide Betätigungszüge 102, 104 stets unter einer Vorspannung gehalten, so dass ein synchroner Antrieb beider Betätigungszüge 102, 104 und mit Ihnen eine synchrone Bewegung der daran gekoppelten Mitnehmer 108 stets gewährleistet werden kann. Einem etwaigen Verkanten oder einer Schieflage der Zugstange 16 kann somit entgegengewirkt werden.

Ferner ist vorgesehen, beide voneinander unabhängig ausgestalteten Betätigungszüge 102, 104 an eine gemeinsame Seiltrommel 106 zu koppeln, welche bezogen auf ihre Drehachse axial voneinander beabstandete oder axial aneinander angrenzende Abschnitte zur Aufnahme je eines Seilzuges 102, 104 aufweist. Hierdurch kann in einfacher Art und Weise eine synchrone Bewegung der beiden an den Führungsschienen 18, 20 geführten Mitnehmer 108 mittels eines einzigen Antriebes 34 zur Verfügung gestellt werden.

### Bezugszeichenliste

- 10: Abdeckvorrichtung
- 12: Abdeckbahn
- 14: Wickelkassette
- 16: Zugstange
- 18: Führungsschiene
- 20: Führungsschiene
- 22: Verriegelungsglied
- 24: Verriegelungsglied
- 26: Mitnehmer
- 28: Mitnehmer
- 30: Mitnehmer
- 32: Mitnehmer
- 34: Antrieb
- 36: Seiltrommel
- 38: Betätigungszug
- 40: Schlauchfassung
- 42: Schlauchfassung
- 44: Schlauchfassung
- 46: Schlauchfassung
- 48: Umlenkrolle
- 50: Umlenkrolle
- 52: Innenzug
- 54: Innenzug
- 56: Schwenkachse
- 58: Hinterschneidung
- 60: Aufnahme
- 62: Schrägfläche
- 64: Anlaufschräge
- 66: Schrägfläche
- 68: Vorsprung
- 70: Vorsprung
- 72: Aufnahme
- 74: Führungsschlitz
- 76: Führungsschlitz
- 80: Nachstellung
- 100: Nachstellung
- 102: Seilzug
- 104: Seilzug
- 106: Seiltrommel
- 108: Mitnehmer
- 110: Nachstellung

## Patentansprüche

1. Laderaumabdeckvorrichtung für den Kraftfahrzeuginnenraum mit einer flächig aufspannbaren, auf einer drehbar gelagerten Wickelwelle aufrollbaren Abdeckbahn (12), an der eine Zugstange (16) angeordnet ist, wobei im Bereich der Wickelwelle ein Federmechanismus vorgesehen ist, der bei einer Auszugsbewegung der Zugstange (16) eine entgegenwirkende Rückstellkraft auf die Zugstange (16) ausübt, wobei die Zugstange (16) mit ihren gegenüberliegenden Endabschnitten zwischen zwei parallel zueinander verlaufenden Führungsschienen (18, 20) zwangsgeführt und mit einem Verstellantrieb (34) koppelbar ist, wobei zur Kopplung der Zugstange mit dem Verstellantrieb (34) an jeder Führungsschiene (18, 20) zur Überführung der Zugstange (16) von einer Ausgangs- in eine Endstellung ein entlang der Führungsschiene (18, 20) verschiebbarer Mitnehmer (26, 28; 108) vorgesehen ist, **dadurch gekennzeichnet, dass** dieef Mitnehmer (26. 28, 108) über zumindest ein flexibel ausgebildetes und translatorisch bewegbares Zugmittel (38; 102, 104) an den Verstellantrieb (34) gekoppelt sind, wobei dem Zugmittel eine Längennachstellvorrichtung (80; 100, 110) zur Kompensation einer betriebsbedingt auftretenden Längung des Zugmittels (38; 102, 104) zugeordnet ist und wobei das flexible Zugmittel als Seilzug (38) ausgebildet ist, welcher an einem stirnseitigen Endabschnitt der Führungsschienen (18. 20) angelenkt und an einem dem Endabschnitt gegenüberliegenden Abschnitt über eine Umlenkung (48, 50) geführt ist.

2. Vorrichtung nach einem der vorhergehenden Ansprüche, **dadurch gekennzeichnet, dass** das Zugmittel als geschlossener umlaufender Seilzug (38) ausgebildet ist oder zwei getrennte Seilzüge (102, 104) aufweist, welche einerseits an je einen Mitnehmer (26, 28) und andererseits an einen gemeinsamen Verstellantrieb (34) gekoppelt sind.

3. Vorrichtung nach Anspruch 2, **dadurch gekennzeichnet, dass** die Kopplung zweier Seil- oder Betätigungszüge an einen gemeinsamen Verstellantrieb (34) mittels einer zweiteiligen Seiltrommel (106) erfolgt, welche axial voneinander beabstandete einander drehfest verbundene Seiltrommelabschnitte zur Aufnahme je eines Seilzuges aufweist.

4. Vorrichtung nach einem der vorhergehenden Ansprüche 2 oder 3, **dadurch gekennzeichnet, dass** jedem der beiden Seilzüge (102, 104) eine gesonderte Längennachstelleinrichung (100, 110) zugeordnet ist.

5. Vorrichtung nach einem der vorhergehenden Ansprüche, **dadurch gekennzeichnet, dass** ein wahlweise in eine Verriegelungsstellung oder Lösestellung überführbares Verriegelungsglied (24) vorgesehen ist, welches dazu ausgebildet ist, die Zugstange (16) in einer Endstellung an der Führungsschiene (18, 20) zu fixieren und der erste Mitnehmer (30, 32) dazu ausgebildet ist, das Verriegelungsglied (24) infolge einer entsprechenden Verstellbewegung des Mitnehmers entlang der Führungsschiene (18, 20) von der Verriegelungsstellung in die Lösestellung zu überführen.

6. Vorrichtung nach Anspruch 5, **dadurch gekennzeichnet, dass** das Verriegelungsglied (24) als schwenkbar gelagerte Sperrklinke mit einer Anlaufschräge (64) ausgebildet ist, die beim Überführen der Zugstange (16) in die Endstellung mit dieser zum zumindest zeitweisen Überführen der Sperrklinke (24) in die Lösestellung zusammenwirkt.

7. Vorrichtung nach einem der vorhergehenden Ansprüche 5 und 6, **dadurch gekennzeichnet, dass** der erste Mitnehmer (30, 32) eine Schrägfläche (66) aufweist, die zum Überführen des Verriegelungsglieds (24) in die Lösestellung mit einer korrespondierenden Schrägfläche (62) des Verriegelungsglieds (24) zusammenwirkt.

8. Vorrichtung nach einem der vorhergehenden Ansprüche, **dadurch gekennzeichnet, dass** das Verriegelungsglied (24) eine konvex gewölbte Aufnahme (60) aufweist in welcher die Zugstange (16) in der Endstellung zu liegen kommt.

## Claims

1. Loading space covering device for the interior space of a motor vehicle, comprising a covering web (12) which can be stretched two-dimensionally and rolled up on a rotatably mounted winding shaft, and at which a draw rod (16) is arranged, wherein a spring mechanism is provided in the area of the winding shaft, exerting an opposing restoring force on the draw rod (16) when the draw rod (16) performs a pull-out motion, wherein the draw rod (16) is constrainedly guided with its opposite end sections between two guide rails (18, 20) that extend in parallel to each other and is couplable with an adjusting drive (34), wherein for coupling the draw rod to the adjusting drive (34) an entrainer (26, 28; 108), which is displaceable along the guide rail (18, 20), is provided at each guide rail (18, 20) for transferring the draw rod (16) from a start setting to an end setting, **characterized in that** the entrainers (26, 28, 108) are coupled to the adjusting drive (34) by means of at least one flexibly constructed and translationally movable traction means (38; 102, 104), wherein a length-adjusting device (80; 100, 110) for compensating for any elongation of the traction means (38; 102, 104) as it occurs during operation is associated with the traction means, and wherein the flexible traction means is constructed as a cable pull (38), which is linked at an end-face end section of the guide rails (18, 20) and is guided at a section opposite to an end section via a redirecting device (48, 50).

2. Device according to any of the preceding claims, **characterised in that** the traction means is constructed as a closed encircling cable pull (38) or comprises two separate cable pulls (102, 104) which at one end are each coupled to respectively one entrainer (26, 28) and at the other end to a common adjusting drive (34).

3. Device according to claim 2, **characterised in that** the coupling of two cable or actuating pulls to a common adjusting drive (34) is carried out by means of a two-part cable drum (106), comprising cable drum sections that are axially spaced apart and connected to each other in a torque-proof manner for receiving a respective cable pull.

4. Device according to any of the preceding claims 2 and 3, **characterised in that** a separate length-adjusting device (100, 110) is assigned to each of the two cable pulls (102, 104).

5. Device according to any one of the preceding claims, **characterised in that** a locking element (24) that is selectably transferable into a locking setting or a release setting is provided and constructed for the purpose of fixing the draw rod (16) in an end setting at the guide rail (18, 20), and the first entrainer (30, 32) is constructed for the purpose of transferring the locking element (24) from the locking setting to the release setting as a consequence of a corresponding adjusting movement of the entrainer along the guide rail (18, 20)

6. Device according to claim 5, **characterised in that** the locking element (24) is constructed as a pivotably mounted pawl with an entry chamfer (64) which on transfer of the draw rod (16) to the end setting co-operates therewith for at least temporarily transferring the pawl (24) into the release setting.

7. Device to any one of the preceding claims 5 and 6, **characterised in that** the first entrainer (30, 32) has an inclined surface (66) co-operating with a corresponding inclined surface (62) of the locking element (24) for transferring the locking element (24) into the release setting.

8. Device according to any one of the preceding claims, **characterised in that** the locking element (24) has a convexly curved receptacle (60) inside of which the draw rod (16) comes to rest in the end setting.

## Revendications

1. Dispositif de recouvrement d'espace de chargement pour l'espace intérieur d'un véhicule automobile, comportant une bande de recouvrement (12) pouvant être déployée sur toute la surface, enroulable sur un arbre d'enroulement supporté en rotation, sur laquelle est disposée une barre de traction (16), un mécanisme de ressort étant prévu dans la région de l'arbre d'enroulement, lequel, dans le cas d'un mouvement de traction de la barre de traction (16), exerce une force de rappel opposée sur la barre de traction (16), la barre de traction (16) étant guidée de force par ses sections terminales entre deux rails de guidage (18, 20) s'étendant parallèlement l'un à l'autre et pouvant être couplée à une commande de réglage (34), un entraîneur (26, 28 ; 108) déplaçable le long du rail de guidage (18, 20) étant prévu pour le couplage de la barre de traction avec la commande de réglage (34), au niveau de chaque rail de guidage (18, 20), afin de passer la barre de traction (16) d'une position initiale à une position terminale, **caractérisé en ce que** les entraîneurs (26, 28, 108) sont couplés via au moins un moyen de traction (38 ; 102, 104) de conformation souple et mobile en translation à la commande de réglage (34), au moyen de traction étant associé un dispositif de réajustement de longueur (80 ; 100, 110) pour la compensation d'un allongement du moyen de traction (38 ; 102, 104) se produisant de manière liée au fonctionnement et le moyen de traction souple se présentant sous la forme d'un câble de traction (38) qui s'articule à une section terminale frontale des rails de guidage (18, 20) et est guidé au niveau d'une section opposée à la section terminale via une déviation (48, 50).

2. Dispositif selon l'une des revendications précédentes, **caractérisé en ce que** le moyen de traction se présente sous la forme d'un câble de traction périphérique fermé (38) ou présente deux câbles de traction séparés (102, 104) qui sont couplés chacun d'une part à un entraîneur (26, 28) et d'autre part à une commande de réglage commune (34).

3. Dispositif selon la revendication 2, **caractérisé en ce que** le couplage des deux câbles de traction ou d'actionnement à une commande de réglage commune (34) est réalisé au moyen d'un tambour de câble en deux parties (106) qui présente des sections de tambour de câble reliées entre elles de manière fixe en rotation, espacées mutuellement dans le sens axial et destinées à recevoir chacune un câble de traction.

4. Dispositif selon l'une des revendications précédentes 2 ou 3, **caractérisé en ce qu'**à chacun des deux câbles de traction (102, 104) est associé un système de réajustement de longueur (100, 110) séparé.

5. Dispositif selon l'une des revendications précédentes, **caractérisé en ce qu'**un élément de verrouillage (24) pouvant être passé au choix dans une position de verrouillage ou de relâchement et qui est conçu pour fixer la barre de traction (16) dans une position terminale au niveau du rail de guidage (18, 20) est prévu et le premier entraîneur (30, 32) est conçu pour passer l'élément de verrouillage (24), à la suite d'un mouvement de réglage correspondant de l'entraîneur le long du rail de guidage (18, 20), de la position de verrouillage à la position de relâchement.

6. Dispositif selon la revendication 5, **caractérisé en ce que** l'élément de verrouillage (24) se présente sous la forme d'un cliquet d'arrêt supporté de manière pivotante et doté d'une pente de démarrage (64) qui, lors du passage de la barre de traction (16) dans la position terminale, coopère avec celle-ci pour le passage au moins temporaire du cliquet d'arrêt (24) dans la position de relâchement.

7. Dispositif selon l'une des revendications précédentes 5 et 6, **caractérisé en ce que** le premier entraîneur (30, 32) présente une surface oblique (66) qui, pour permettre le passage de l'élément de verrouillage (24) dans la position de relâchement, coopère avec une surface oblique correspondante (62) de l'élément de verrouillage (24).

8. Dispositif selon l'une des revendications précédentes, **caractérisé en ce que** l'élément de verrouillage (24) présente un logement (60) à courbure convexe dans lequel la barre de traction (16) va se mettre en position terminale.
